# EUROPÄISCHE PATENTSCHRIFT

(11) **EP 2 584 208 B1**
(45) Veröffentlichungstag und Bekanntmachung des Hinweises auf die Patenterteilung: **18.05.2016**
(21) Anmeldenummer: 12188629.5
(22) Anmeldetag: 16.10.2012
(51) Int. Cl.: F16B 37/12

(54) **Anbauteilanbindung für Kraftfahrzeugaufbau**
Attachment connection for motor vehicle body
Connexion de composant de montage pour montage de véhicule automobile

(30) Priorität: 17.10.2011 DE 102011054543
(43) Veröffentlichungstag der Anmeldung: 24.04.2013
(73) Patentinhaber: Webasto SE, 82131 Stockdorf (DE)
(72) Erfinder: Geake, Patrick, 80335 München (DE); Lusson, Mickael, 49300 Le Puy Saint Bonnet (FR); Haussmann, Jochen, 82346 Andechs (DE); Leray, Cedric, 35350 St. Méloir Des Ondes (FR)
(74) Vertreter: advotec.

(56) Entgegenhaltungen:
- EP-A1- 0 186 608
- EP-A1- 0 596 842
- EP-A1- 1 760 333
- EP-A1- 2 484 924

## Beschreibung

Die Erfindung betrifft ein Aufbauteil eines land-, wasser- oder luftgebundenen Fahrzeugs mit den Merkmalen des Oberbegriffs des Patentanspruches 1.

Ein derartiges Aufbauteil ist aus der Druckschrift EP 0 186 608 A1 bekannt.

Ein als Bestandteil eines Kraftfahrzeugs ausgebildetes Aufbauteil kann ein Verdeckkastendeckel eines Cabriolet-Fahrzeugs sein. Es kann aus einem Kunststoffwerkstoff, wie SMC (Sheet Molding Compound) hergestellt sein. Das bekannte Aufbauteil umfasst einen plattenartigen Abschnitt, an dem ein Anbauteil angebunden ist. Das Anbauteil ist beispielsweise Bestandteil einer Kinematik des Verdeckkastendeckels. Um eine sichere Anbindung des Anbauteils zu gewährleisten, ist der plattenartige Abschnitt mit einer Hülse versehen, die eine Gewindebohrung aufweist. In die Gewindebohrung ist eine Schraube eingedreht, die das Anbauteil an dem plattenartigen Abschnitt sichert.

Beispielsweise ist es bekannt, eine Gewindehülse an einer Seite eines plattenförmigen SMC-Bauteils aufzukleben und eine Gewindeschraube durch eine korrespondierende Durchgangsöffnung des SMC-Bauteils zur Anbindung eines Kinematikbauteils durch das SMC-Bauteil hindurch in eine Gewindebohrung der Gewindehülse einzudrehen. Auch ist es bekannt, eine Gewindehülse in eine Durchgangsöffnung eines plattenförmigen SMC-Bauteils einzuformen. Insbesondere bei großen Anziehmomenten der Verbindungsschraube wird bei diesen Lösungen aber gegebenenfalls keine hinreichende Stabilität gewährleistet.

Der Erfindung liegt die Aufgabe zugrunde, ein Aufbauteil der einleitend genannten Gattung mit einer Anbindungseinrichtung zu schaffen, die eine hohe Dauerfestigkeit aufweist.

Diese Aufgabe ist erfindungsgemäß durch das Aufbauteil mit den Merkmalen des Patentanspruches 1 gelöst.

Erfindungsgemäß wird also ein Aufbauteil eines land-, wasser- oder luftgebundenen Fahrzeugs mit mindestens einem plattenartigen Abschnitt vorgeschlagen, der mit einer Hülse zur Anbindung eines Anbauteils versehen ist, die eine Gewindebohrung aufweist. Die Hülse umfasst einen mit der Gewindebohrung versehenen Einsatz, der in einer Axialrichtung der Gewindebohrung eine korrespondierende Durchgangsöffnung des plattenartigen Abschnitts durchgreift und an einem Ende von einer Stirnplatte begrenzt ist, die an dem plattenartigen Abschnitt anliegt. An der der Stirnplatte abgewandten Seite des Einsatzes liegt eine Lochscheibe an, die an der der Stirnplatte abgewandten Seite des plattenartigen Abschnitts anliegt. Der Einsatz und die Lochscheibe liegen über eine Verbindungsmaterialschicht an dem plattenartigen Abschnitt an. Das Anbauteil ist mittels einer in die Gewindebohrung eingreifenden Schraube an der Hülse gesichert.

Die Hülse ist bei dem erfindungsgemäß ausgebildeten Fahrzeugaufbauteil formgebunden in den plattenartigen Abschnitt eingebunden und übergreift den die Durchgangsöffnung begrenzenden Rand des plattenartigen Abschnitts. Ein gegebenenfalls erforderlicher Toleranzausgleich erfolgt über die Verbindungsmaterialschicht und damit spannungsfrei. Die im Sinne der Erfindung in dem plattenartigen Abschnitt integrierte Hülse kann hohe Drehmomente aufnehmen. Der Abbau von über die Schraube eingetragenen Spannungen erfolgt nur in der Hülse. Mit der erfindungsgemäß ausgebildeten Hülse, bei der geringe Bauhöhen realisierbar sind, lässt sich damit eine hohe Dauerfestigkeit realisieren, und zwar auch bei Anbindung von Kinematikbauteilen. Auch zeichnet sich die durch diese Hülse realisierte Anbindung durch geringe Bauteilkosten und geringe Montagewerkzeugkosten aus, so dass sich die bei dem Aufbauteil nach der Erfindung realisierte Anbindungshülse auch für kleine Stückzahlen eignet.

Das Aufbauteil nach der Erfindung kann grundsätzlich bei jeglichen land-, wasser- oder luftgebundenen Fahrzeugen zum Einsatz kommen.

Im Bereich des Automobilbaus kann das Aufbauteil nach der Erfindung beispielsweise zur Anbindung einer Kinematik einer Heckklappe oder eines Cabriolet-Verdecks an einem aus SMC (Sheet Molding Compound) hergestellten plattenartigen Abschnitt genutzt werden. Entsprechend ist es denkbar, im Bereich des Flugzeugbaus Kinematikbauteile im Sinne der Erfindung an einen plattenartigen Abschnitt aus SMC anzubinden.

Grundsätzlich kann der plattenartige Abschnitt aus einem beliebigen Werkstoff gefertigt sein, der für den jeweiligen Anwendungsfall ausreichende Trägereigenschaften hat. Insbesondere eignet sich die erfindungsgemäß ausgebildete Hülse aber zur Anbindung von Anbauteilen an einen plattenartigen Abschnitt aus einem fließfähigen Material, das aus einem Komposit- und Kunststoffwerkstoff, wie SMC, bestehen kann. Auch kann der plattenartige Abschnitt aus Aluminium oder einem sonstigen metallischen Werkstoff gefertigt sein.

Zur einfachen Zentrierung der Lochscheibe gegenüber dem Einsatz weist letzterer bei einer bevorzugten Ausführungsform an seiner der Stirnplatte abgewandten Stirnseite vorzugsweise eine Stufe auf, an der die Lochscheibe mit ihrer inneren Umfangsfläche anliegt.

Der Begriff Lochscheibe ist in seinem weitesten Sinne zu verstehen. Es kann sich hierbei um eine Scheibe mit Ringform oder auch jeder dem jeweiligen Anwendungsfall angepassten Innen- und Außenkontur handeln.

Um nicht der Problematik einer Doppelpassung zu unterliegen, hat die Stufe bei einer zweckmäßigen Ausführungsform eine Höhe, die geringer oder größer als die Dicke der Lochscheibe ist. Das Anbauteil oder ein zwischengeschaltetes Überbrückungsbauteil liegt damit entweder nur direkt an dem Einsatz oder nur direkt an der Lochscheibe an. Ein hieraus resultierender, zwischen dem Anbauteil bzw. dem Überbrückungsbauteil und dem Einsatz oder der Lochscheibe angeordneter Spalt ist vorzugsweise mittels eines Klebstoffs ausgefüllt, so dass sich das Anbauteil bzw. das Überbrückungsbauteil über den Klebstoff auch an dem jeweiligen anderen Bauteil, d. h. an der Lochscheibe oder dem Einsatz abstützt.

Das Überbrückungsbauteil, das zwischen dem Anbauteil und der Hülse angeordnet ist, ist beispielsweise ein Distanzblech oder ein sonstiges für den jeweiligen Anwendungsfall erforderliches Bauelement.

Um die Lochscheibe in einfacher Weise an dem Einsatz sichern zu können und um eine einfache Handhabbarkeit der Hülse zu gewährleisten, weist der Einsatz bei einer vorteilhaften Ausführungsform des Aufbauteils nach der Erfindung ein Außengewinde auf, auf das die Lochscheibe aufgeschraubt ist.

Die Verbindungsmaterialschicht zwischen dem plattenartigen, einen Träger darstellenden Abschnitt und der Hülse ist insbesondere aus einem Klebstoff gebildet. Um die Festigkeit des Verbundes aber weiter zu erhöhen, sind prinzipiell auch andere Fügeverfahren denkbar. Beispielsweise können der plattenartige Abschnitt und die Hülse nach einem Löt- oder einem Schweißverfahren verbunden sein, so dass sich zwischen diesen Bauelementen eine entsprechende Verbindungsmaterialschicht ausbildet.

Weitere Vorteile und vorteilhafte Ausgestaltungen des Gegenstandes der Erfindung sind der Beschreibung, der Zeichnung und den Patentansprüchen entnehmbar.

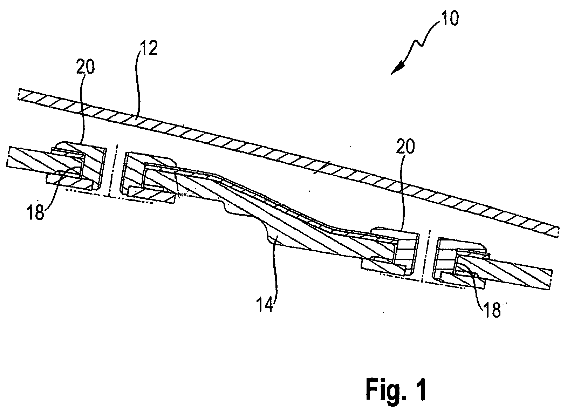

Ein Ausführungsbeispiel eines Fahrzeugaufbauteils nach der Erfindung ist in der Zeichnung schematisch vereinfacht dargestellt und wird in der nachfolgenden Beschreibung näher erläutert. Es zeigt
- Fig. 1: eine Schnittdarstellung durch einen Verdeckkastendeckel mit einer Anbindungshülse für ein Anbauteil;
- Fig. 2: einen Schnitt durch den Verdeckkastendeckel im Bereich der Anbindungshülse mit Anbauteil; und
- Fig. 3: eine schematische Schnittdarstellung, die die Anbindung des Anbauteils an den Verdeckkastendeckel erläutert.

In der Zeichnung ist ein Verdeckkastendeckel 10 eines ansonsten nicht näher dargestellten Cabriolet-Fahrzeugs dargestellt, der eine Außenhaut 12 und eine Innenhaut 14 aus einem SMC-Werkstoff umfasst, die plattenartig ausgebildet ist.

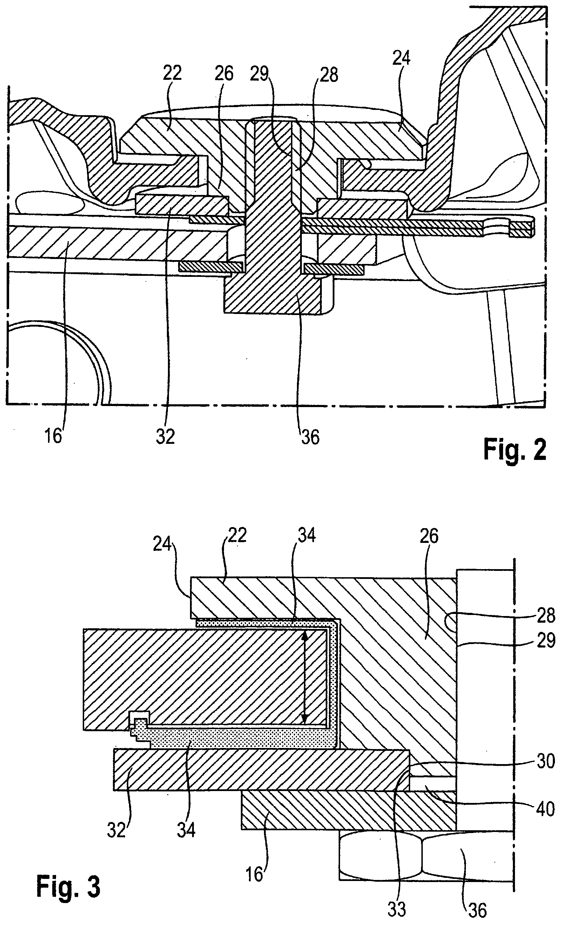

Zur Anbindung eines in den Figuren 2 und 3 dargestellten Anbauteils 16, das Bestandteil einer Kinematik des Verdeckkastendeckels 10 ist, weist die Innenhaut 14 zwei Durchgangsöffnungen 18 auf, die jeweils von einer Anbindungshülse bzw. Gewindehülse 20 durchgriffen sind. Die Gewindehülsen 20 umfassen jeweils einen Einsatz 22, der, wie Fig. 2 zu entnehmen ist, im Wesentlichen pilzförmig ausgebildet ist bzw. einen im Wesentlichen T-förmigen Längsschnitt hat und eine Stirnplatte 24 aufweist, an die sich ein stiftartiger Abschnitt 26 anschließt, der mit einem Innengewinde 28 einer Gewindebohrung 29 versehen ist. Der Einsatz 22 durchgreift mit seinem Abschnitt 26 die jeweilige Öffnung 18 der Innenhaut 14.

An seiner der Stirnplatte 24 abgewandten Stirnseite weist der Einsatz 22 eine Stufe 30 auf, an der eine Lochscheibe 32 mit ihrer inneren Umfangsfläche anliegt. Die Stufe 30 hat eine Höhe, die geringer ist als die Dicke der Lochscheibe 32.

Zur sicheren Anbindung der Lochscheibe 32 an den Einsatz 22 kann die Stufe 30 mit einem Außengewinde 33 versehen sein, in das ein Innengewinde der Lochscheibe 32 eingreift.

Die Gewindehülse 20, die aus dem Einsatz 22 und der Lochscheibe 32 gebildet ist, übergreift den die Durchgangsöffnung 18 begrenzenden Rand der Innenhaut 14. Zur sicheren Anbindung der Gewindehülse 20 an die Innenhaut 14 ist sowohl der Einsatz 22 bzw. die Stirnplatte 24 des Einsatzes 22 als auch die Lochscheibe 32 über eine Klebstoffschicht 34, die eine Verbindungsmaterialschicht darstellt, an die Innenhaut 14 angebunden.

Das Anbauteil 16 ist mittels einer Schraube 36, die in das Innengewinde 28 des Einsatzes 22 eingedreht ist, mit der Lochscheibe 32 verpresst (vgl. Fig. 3). Denkbar ist es auch, zwischen dem Anbauteil 16 und der Lochscheibe 32 ein Abstandsblech oder dergleichen vorzusehen.

Zwischen dem Anbauteil 16 und der diesem zugewandten Stirnseite des Einsatzes 22 ist ein Spalt 40 ausgebildet. Dieser ist mittels eines Klebstoffs ausgefüllt.

### Bezugszeichenliste

- 10: Verdeckkastendeckel
- 12: Außenhaut
- 14: Innenhaut
- 16: Anbauteil
- 18: Durchgangsöffnung
- 20: Gewindehülse
- 22: Einsatz
- 24: Stirnplatte
- 26: Abschnitt
- 28: Innengewinde
- 29: Gewindebohrung
- 30: Stufe
- 32: Lochscheibe
- 33: Außengewinde
- 34: Klebstoffschicht
- 36: Schraube
- 40: Spalt

## Patentansprüche

1. Aufbauteil eines land-, wasser- oder luftgebundenen Fahrzeugs mit mindestens einem plattenartigen Abschnitt (14), der mit einer Hülse (20) zur Anbindung eines Anbauteils (16) versehen ist, die eine Gewindebohrung (29) zum Eingriff einer Schraube (36) zur Sicherung des Anbauteils (16) aufweist, wobei die Hülse (20) einen mit der Gewindebohrung (29) versehenen Einsatz (22) umfasst, der in einer Axialrichtung der Gewindebohrung (29) eine korrespondierende Durchgangsöffnung (18) des plattenartigen Abschnitts (14) durchgreift und an einem Ende von einer Stirnplatte (24) begrenzt ist, die an dem plattenartigen Abschnitt (14) anliegt, wobei an der der Stirnplatte (24) abgewandten Seite des Einsatzes eine Lochscheibe (32) anliegt, die an der der Stirnplatte (24) abgewandten Seite des plattenartigen Abschnitts (14) anliegt, **dadurch gekennzeichnet, dass** der Einsatz (22) und die Lochscheibe (32) über eine Verbindungsmaterialschicht (34) an dem plattenartigen Abschnitt (14) anliegen.

2. Aufbauteil nach Anspruch 1, **dadurch gekennzeichnet, dass** der Einsatz (22) an seiner der Stirnplatte (24) abgewandten Stirnseite eine Stufe (30) aufweist, an der die Lochscheibe (32) mit ihrer inneren Umfangsfläche anliegt.

3. Aufbauteil nach Anspruch 2, **dadurch gekennzeichnet, dass** die Stufe (30) eine Höhe hat, die größer oder geringer als die Dicke der Lochscheibe (32) ist.

4. Aufbauteil nach Anspruch 3, **dadurch gekennzeichnet, dass** ein Spalt (40), der aus der von der Dicke der Lochscheibe (32) abweichenden Höhe der Stufe (30) resultiert, mit einem Klebstoff ausgefüllt ist.

5. Aufbauteil nach einem der Ansprüche 1 bis 4, **dadurch gekennzeichnet, dass** der Einsatz (22) ein Außengewinde (33) aufweist, auf das die Lochscheibe (32) aufgeschraubt ist.

6. Aufbauteil nach einem der Ansprüche 1 bis 5, **dadurch gekennzeichnet, dass** die Verbindungsmaterialschicht (34) aus einem Klebstoff gebildet ist.

7. Aufbauteil nach einem der Ansprüche 1 bis 6, **dadurch gekennzeichnet, dass** der plattenartige Abschnitt (14) aus einem Kunststoffwerkstoff, insbesondere aus einem SMC (Sheet Molding Compound)-Werkstoff besteht.

## Claims

1. A structure part of a land, water or air vehicle having at least one plate-like portion (14), which is provided with a sleeve (20) for joining an attachment piece (16), which sleeve includes a threaded hole (29) for being engaged by a screw (36) for securing the attachment piece (16), wherein the sleeve (20) comprises an insert (22) which is provided with the threaded hole (29), and which reaches through a corresponding through-hole (18) of the plate-like portion (14) in an axial direction of the threaded hole (29) and, at one end, is limited by a front plate (24), which rests against the plate-like portion (14), wherein a punched disc (32) rests against the side of the insert facing away from the front plate (24), said punched disc resting against the side of the plate-like portion (14) facing away from the front plate (24), **characterised in that** the insert (22) and the punched disc (32) rest against the plate-like portion (14) via a connecting material layer (34).

2. The structure part according to claim 1, **characterised in that** the insert (22), at its face side facing away from the front plate (24), includes a step (30), against which the punched disc (32) rests with its inner peripheral face.

3. The structure part according to claim 2, **characterised in that** the step (30) has a height that is greater or lower than the thickness of the punched disc (32).

4. The structure part according to claim 3, **characterised in that** a gap (40), which results from the height of the step (30) deviating from the thickness of the punched disc (32), is filled with an adhesive.

5. The structure part according to any one of the claims 1 to 4, **characterised in that** the insert (22) includes an outside screw thread (33), onto which the punched disc (32) has been screwed.

6. The structure part according to any one of the claims 1 to 5, **characterised in that** an adhesive forms the connecting material layer (34).

7. The structure part according to any one of the claims 1 to 6, **characterised in that** the plate-like portion (14) consists of a plastic material, in particular of an SMC (Sheet Molding Compound) material.

## Revendications

1. Pièce de structure d'un véhicule navigant par terre, sur l'eau ou dans l'air, ayant au moins une partie de type plaque (14), qui est muni d'une cosse (20) pour attacher une pièce (16) rapportée, ladite cosse présentant un trou taraudé (29) pour être pénétré par une vis (36) pour bloquer la pièce (16) rapportée, dans lequel la cosse (20) comprend un insert (22) qui est muni du trou taraudé (29), et qui traverse une ouverture (18) de passage correspondante de la partie (14) de type plaque dans une direction axiale du trou taraudé (29) et, à l'une de ses extrémités, est délimité par une plaque (24) frontale, qui est placée vers la partie (14) de type plaque, dans lequel un disque interrupteur (32) est placé vers le côté de l'insert tourné à l'opposé de la plaque (24) frontale, ledit disque interrupteur étant placé vers le côté de la partie (14) de type plaque tourné à l'opposé de la plaque (24) frontale, **caractérisée en ce que** l'insert (22) et le disque interrupteur (32) sont placés vers la partie (14) de type plaque au travers une couche (34) de substance de connexion.

2. Pièce de structure selon la revendication 1, **caractérisée en ce que** l'insert (22), à sa face frontale tournée à l'opposé de la plaque (24) frontale, présente une marche (30), le disque interrupteur (32) étant placé vers ladite marche avec sa surface périphérique intérieure.

3. Pièce de structure selon la revendication 2, **caractérisée en ce que** la marche (30) a une hauteur qui est supérieure ou inférieure à l'épaisseur du disque interrupteur (32).

4. Pièce de structure selon la revendication 3, **caractérisée en ce qu'**une fente (40), qui résulte de l'hauteur de la marche (30) divergeant de l'épaisseur du disque interrupteur (32), est remplie par un adhésif.

5. Pièce de structure selon l'une quelconque des revendications 1 à 4, **caractérisée en ce que** l'insert (22) présente un filet extérieur (33), le disque interrupteur (32) ayant été vissé dessus ledit filet.

6. Pièce de structure selon l'une quelconque des revendications 1 à 5, **caractérisée en ce qu'**un adhésif forme la couche (34) de substance de connexion.

7. Pièce de structure selon l'une quelconque des revendications 1 à 6, **caractérisée en ce que** la partie (14) de type plaque se compose d'une substance plastique, en particulier d'une substance SMC (Sheet Molding Compound).
